**Europäisches Patentamt**

**European Patent Office**

**Office européen des brevets**

(19)

(11) Veröffentlichungsnummer : **0 188 411 B1**

(12) **EUROPÄISCHE PATENTSCHRIFT**

(45) Veröffentlichungstag der Patentschrift :
30.09.87

(21) Anmeldenummer : **84902799.0**

(22) Anmeldetag : **17.07.84**

(86) Internationale Anmeldenummer :
**PCT/EP 84/00219**

(87) Internationale Veröffentlichungsnummer :
**WO/8501335 (28.03.85 Gazette 85/08)**

(51) Int. Cl.⁴ : **F 16 H   3/08, F 16 H 37/04**

(54) **LASTSCHALTBARES ZAHNRADGETRIEBE.**

(30) Priorität : **15.09.83 PCT/EP83/00241**

(43) Veröffentlichungstag der Anmeldung :
**30.07.86 Patentblatt 86/31**

(45) Bekanntmachung des Hinweises auf die Patenterteilung : **30.09.87 Patentblatt 87/40**

(84) Benannte Vertragsstaaten :
**AT FR GB**

(56) Entgegenhaltungen :
**DE-A- 2 056 521
FR-A- 2 083 843
FR-A- 2 109 790
FR-A- 2 510 492
US-A- 2 991 661**

(73) Patentinhaber : **ZAHNRADFABRIK FRIEDRICHSHA-FEN AKTIENGESELLSCHAFT
Löwentaler Strasse 100 Postfach 2520
D-7990 Friedrichshafen 1 (DE)**

(72) Erfinder : **EHRLINGER, Friedrich, Jakob
Karl-Weiss-Str. 15
D-7990 Friedrichshafen 5 (DE)**
Erfinder : **MÜLLER, Franz
Torkelstr. 17
D-7990 Friedrichshafen 1 (DE)**
Erfinder : **SIMON, Herbert
Hans-Schnitzler-Str. 60
D-7990 Friedrichshafen 1 (DE)**
Erfinder : **SAILER, Hubert
Drosselweg 26
D-7778 Markdorf (DE)**

(74) Vertreter : **Raue, Reimund
Zahnradfabrik Friedrichshafen AG Löwentaler
Strasse 100 Postfach 2520
D-7990 Friedrichshafen 1 (DE)**

**Beschreibung**

Die Erfindung betrifft ein lastschaltbares Zahnradgetriebe in Gruppenbauweise mit einem Vielganghauptgetriebe, einem Wendegetriebe und einem Bereichsgruppengetriebe, mit Wellen, Festrädern, Losrädern und Synchronschaltkupplungen und mit je einer zusätzlichen, lastschaltbaren Reibkupplung in zwei Leistungszweigen, derart, daß die Wellen beider Leistungszweige auf insgesamt zwei Achsen angeordnet sind. Getriebe dieser Art werden insbesondere für Ackerschlepper und ähnliche Fahrzeuge verwendet, sie müssen leicht bedienbar und langlebig, aber trotzdem klein und leicht sein.

Ein Getriebe dieser Art ist bekannt durch die DE-OS 32 28 353, Fig. 16. Es benötigt für acht Vorwärtsgänge und acht Rückwärtsgänge insgesamt 23 Räder, 11 Radzüge und 10 Synchronschaltkupplungen. Die Reibkupplungen sind als zwei vollständige Einzelkupplungen auf zwei verschiedene Achsen verteilt angeordnet. Zwei Synchronschaltkupplungen des Hauptgetriebes werden nicht nur durch eine Welle und die mit dieser Welle drehfest verbundenen Teile von einer Reibkupplung und zwei Synchronschaltkupplungen, sondern zusätzlich auch noch durch vier Räder als Drehmasse belastet. Die beiden Synchronschaltkupplungen des Wendegetriebes werden belastet durch die Drehmasse von zwei Wellen, von Teilen von sechs Synchronschaltkupplungen und von insgesamt zehn Rädern.

Nachteil ist die dementsprechende Baugröße der genannten Synchronschaltkupplungen oder aber ihre unzureichende Lebensdauer.

Nachteil ist der große Aufwand für zwei vollständige Reibkupplungen.

Nachteil ist die große Anzahl von Rädern, Radzügen und Synchronschaltkupplungen, sind die vielen und langen Wellen und der daraus folgende große Aufwand an Baulänge und Gewicht des Getriebes.

Mit den kennzeichnenden Merkmalen der Erfindung wird die Aufgabe gelöst, ein Getriebe dieser Art in allen obenstehend als Nachteil angeführten Punkten zu verbessern.

Ein Getriebe nach Anspruch 1 hat den Vorteil eines wesentlich geringeren Aufwandes, weil eine Reihe von Bauteilen der Doppelkupplung 7, 8 für beide Reibkupplungen 7 und 8 gemeinsam genutzt wird und daher nur einmal vorhanden sein muß. Es hat weiterhin den Vorteil, daß keine einzige Synchronschaltkupplung 9, 10, 11, 12 des Hauptgetriebes 39 durch die Drehmasse von vier Rädern zusätzlich belastet wird.

Ein Getriebe nach Anspruch 2 oder 3 der Erfindung hat in einer Ausführung mit acht Vorwärtsgängen und acht Rückwärtsgängen den Vorteil, daß es nur fünfzehn Räder 17, 18, 19, 20, 21, 22, 23, 24, 25, 26, 27, 28, 30, 31, 32, nur sechs Radzüge 17, 21 ; 18, 22 ; 19, 23 ; 20, 24 ; 25, 32, 31, 27 ; 26, 30, 28 und nur acht Synchronschaltkupplungen 9, 10 ; 11, 12 ; 13, 14 ; 15, 16 benötigt. Es hat weiterhin den Vorteil, daß nur die beiden am seltensten benutzten Synchronschaltkupplungen durch die Drehmasse von nur sieben Rädern 25, 26, 27, 28, 30, 31, 32 zusätzlich belastet werden : entweder (Anspruch 2) die Synchronschaltkupplungen 15 und 16 des Bereichsgetriebes 41 oder (Anspruch 3) die Synchronschaltkupplungen 13 und 14 des Wendegetriebes 40.

Ein Getriebe nach Anspruch 4 hat den Vorteil, daß mit einem zusätzlichen Losrad und einer zusätzlichen Reibkupplung eine weitere lastschaltbare Gangstufe und volle Lastschaltbarkeit durch all Vorwärtsgänge und alle Rückwärtsgänge erreicht wird.

Ein Getriebe nach Anspruch 5 hat den Vorteil der besonders einfachen Lagerung einer motorabhängigen Zapfwelle 6 in einem vorhandenen Wellenstrang.

Ein Getriebe nach Anspruch 6 hat den Vorteil eines besonders geringen Aufwandes für eine Verdoppelung der Anzahl der lastschaltbaren Gangstufen : das Umlaufgetriebe 34 und insbesondere seine Kupplung 37 und seine Bremse 38 können sehr klein gebaut werden, da sie nur geringen Drehmomenten und Drehzahldifferenzen standhalten müssen.

Ein Getriebe nach Anspruch 7 hat den Vorteil eines besonders geringen Aufwandes für eine wegabhängige Zapfwelle 42 und für den Antrieb einer zusätzlichen Antriebsachse : der zur Verlängerung der Ansgangswelle 5 des Schaltgetriebes notwendige Bauraum ist frei, eine einfache Steckwellenverbindung reicht aus.

Ein Getriebe nach Anspruch 8 hat den besonderen Vorteil, daß eine trockene Hauptkupplung entfallen kann : Schaltgetriebe und Antriebsmaschine können direkt zusammengebaut werden : das Gesamtaggregat wird kürzer, leichter, billiger ; keine Wartungsarbeiten an der Kupplung ; keine Abdichtungsprobleme, weil Schaltgetriebe und Antriebsmaschine mit dem gleichen Öl betrieben werden können.

In der Zeichnung sind bevorzugte Ausführungsbeispiele von Getrieben mit den kennzeichnenden Merkmalen der Erfindung als Räderschema dargestellt. Dabei sind übliche Erweiterungen und Ergänzungen sowie solche Einzelheiten weggelassen, die zum Verständnis der Erfindungsgedanken nicht erforderlich sind.

Es zeigen

Figur 1  ein Getriebe nach Anspruch 2,
Figur 2  ein Getriebe nach Anspruch 3,
Figur 3  ein Getriebe nach Anspruch 6.

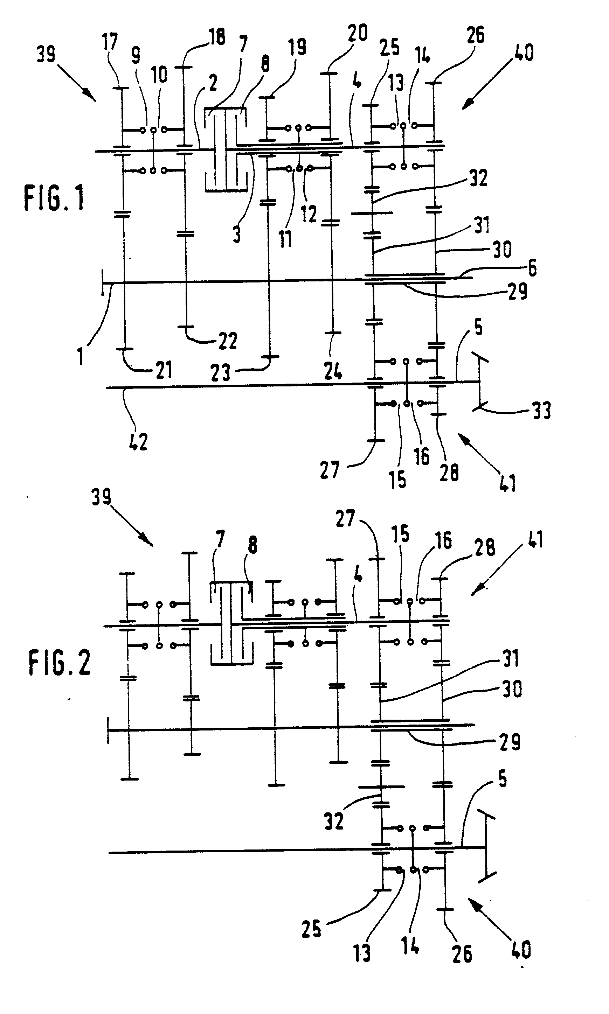

Fig. 1 : Eine Eingangswelle 1 eines Hauptgetriebes 39 trägt Festräder 21, 22, 23, 24 und ist durch eine hohle Zwischenwelle 29 hindurch als Zapfwelle 6 verlängert. Die Festräder 21, 22, 23, 24 kämmen mit Losrädern 17, 18, 19, 20 eines Hauptgetriebes 39. Die Losräder 17 und 18 sind auf einer Eingangswelle 2 einer Reibkupplung 7, die Losräder 19 und 20 auf einer hohlen Eingangswelle 3 einer Reibkupplung 8 gelagert. Die beiden Reibkupplungen 7 und 8 sind zu einer Doppelkupplung 7, 8 baulich vereinigt. Die Losräder 17 und 18 können über Synchronschaltkupplungen 9 und 10 mit der Eingangswelle 2, die Losräder 19 und 20 über Synchronschaltkupplungen 11 und 12 mit der hohlen Eingangswelle 3 wechselweise gekoppelt werden. Auf einer Ausgangswelle 4 der Doppelkupplung 7, 8 sind Losräder 25 und 26 eines Wendegetriebes 40 gelagert. Die Losräder 25 und 26 können über Synchronschaltkupplungen 13 und 14 mit der Ausgangswelle 4 der Doppelkupplung 7, 8 wechselweise gekoppelt werden. Auf einer Ausgangswelle 5 des Schaltgetriebes sind Losräder 27 und 28 eines Bereichsgruppengetriebes 41 gelagert. Die Losräder 27 und 28 können über Synchronschaltkupplungen 15 und 16 mit der Ausgangswelle 5 des Schaltgetriebes wechselweise gekoppelt werden. Die hohle Zwischenwelle 29 trägt Festräder 30 und 31. Das Festrad 30 kämmt mit dem Losrad 26 des Wendegetriebes 40 und mit dem Losrad 28 des Bereichsgruppengetriebes 41. Das Festrad 31 kämmt mit dem Losrad 27 des Bereichsgruppengetriebes 41 und mit dem Umkehrritzel 32, das Umkehrritzel 32 mit dem Losrad 25 des Wendegetriebes 40. Die Ausgangswelle 5 des Schaltgetriebes ist zur Eingangsseite hin als wegabhängige Zapwelle 42 verlängert.

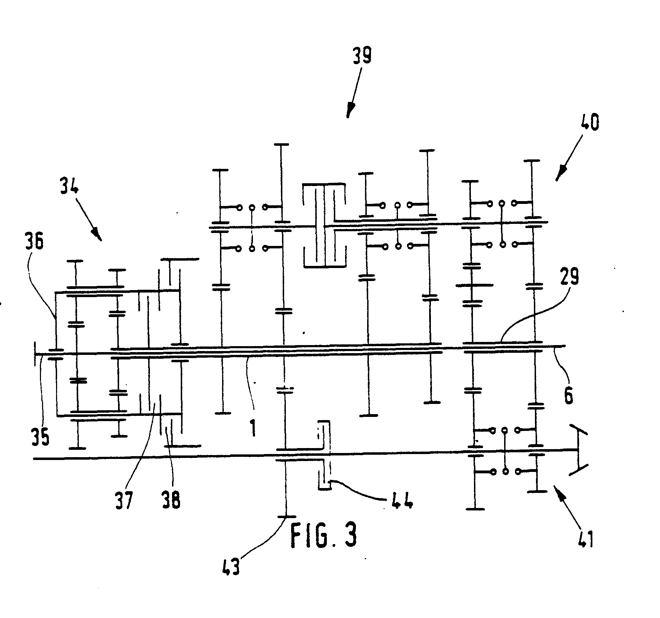

Fig. 2 : Die Ausführung unterscheidet sich von der in Fig. 1 dargestellten nur in wenigen Einzelheiten :

die Losräder 25 und 26 des Wendegetriebes 40 sind auf der Ausgangswelle 5 des Schaltgetriebes gelagert ; ·

die Losräder 27 und 28 des Bereichsgruppengetriebes 41 sind auf der Ausgangswelle 4 der Doppelkupplung 7, 8 gelagert.

Fig. 3 : Diese Ausführung ist aus der in Fig. 1 dargestellten weiterentwickelt. Es ist ein Splitgruppengetriebe 34 hinzugefügt. Eine Eingangswelle 35 des Umlaufgetriebes 34 ist durch die hohle Eingangswelle 1 des Hauptgetriebes 39 und die hohle Zwischenwelle 29 hindurch als Zapfwelle 6 verlängert. Ein Steg 36 des Umlaufgetriebes 34 kann über eine Reibkupplung 37 mit der Eingangswelle 1 des Hauptgetriebes 39 gekoppelt werden, das ganze Umlaufgetriebe 34 läuft dann als Kupplung. Der Steg 36 kann auch wechselweise über eine Reibbremse 38 festgehalten werden, das Umlaufgetriebe 34 wird dann zum Standgetriebe mit geringer Drehzahldifferenz zwischen den beiden Wellen 34 und 1.

Ein Losrad 43 auf der Ausgangswelle 5 des Schaltgetriebes kämmt mit einem Festrad 22 der Eingangswelle 1 des Hauptgetriebes 39. Eine Reibkupplung 44 verbindet das Losrad 43 mit der Ausgangswelle 5.

Bezugszeichen

1 Eingangswelle Hauptgetriebe, Ausgangswelle Splitgetriebe
2 Eingangswelle Reibkupplung
3 Eingangswelle Reibkupplung, Hohlwelle
4 Ausgangswelle Doppelkupplung
5 Ausgangswelle Schaltgetriebe

6 Zapfwelle, motorabhängig
7 Reibkupplung Hauptgetriebe
8 Reibkupplung Hauptgetriebe
9 Synchronschaltkupplung
10 Synchronschaltkupplung
11 Synchronschaltkupplung
12 Synchronschaltkupplung
13 Synchronschaltkupplung
14 Synchronschaltkupplung
15 Synchronschaltkupplung
16 Synchronschaltkupplung
17 Losrad Hauptgetriebe
18 Losrad Hauptgetriebe
19 Losrad Hauptgetriebe
20 Losrad Hauptgetriebe
21 Festrad Hauptgetriebe
22 Festrad Hauptgetriebe
23 Festrad Hauptgetriebe
24 Festrad Hauptgetriebe
25 Losrad Wendegetriebe
26 Losrad Wendegetriebe
27 Losrad Bereichsgruppengetriebe
28 Losrad Bereichsgruppengetriebe
29 Zwischenwelle, Hohlwelle
30 Festrad Zwischenwelle
31 Festrad Zwischenwelle
32 Umkehrritzel Wendegetriebe
33 Kegelritzel
34 Splitgruppengetriebe, Umlaufgetriebe
35 Eingangswelle Umlaufgetriebe
36 Steg Umlaufgetriebe
37 Reibkupplung Umlaufgetriebe
38 Reibbremse Umlaufgetriebe
39 Hauptgetriebe
40 Wendegetriebe
41 Bereichsgruppengetriebe
42 Zapwelle, wegabhängig
43 Losrad Ausgangswelle Schaltgetriebe
44 Reibkupplung Ausgangswelle Schaltgetriebe

**Patentansprüche**

1. Lastschaltbares Zahnradgetriebe, insbesondere für Ackerschlepper, in Gruppenbauweise mit einem Vielgang-Hauptgetriebe (39), einem Wendegetriebe (40) und einem Bereichsgruppengetriebe (41), mit Wellen (1, 2, 3, 4, 5, 6, 29, 42), Festrädern (21, 22, 23, 24, 30, 31), Losrädern (17, 18, 19, 20, 25, 26, 27, 28) und Synchronschaltkupplungen (9, 10, 11, 12, 13, 14, 15, 16) und mit je einer zusätzlichen, lastschaltbaren Reibkupplung (7, 8) in zwei Leistungszweigen derart, daß die Wellen (1, 2, 3, 4) beider Leistungszweige auf insgesamt zwei Achsen angeordnet sind, gekennzeichnet durch die Merkmale :

die beiden Reibungskupplungen (7 und 8) sind baulich vereinigt zu einer Doppelkupplung (7, 8) mit zwei Eingangswellen (2 und 3) und einer Ausgangswelle (4) und axial zwischen diesen beiden Eingangswellen (2 und 3) angeordnet ;

die Losräder (17, 18, 19, 20) des Hauptgetriebes (39) sind auf den beiden Eingangswellen (2 und 3) der Doppelkupplung (7, 8) angeordnet ;

die Festräder (21, 22, 23, 24) des Hauptgetriebes (39) sind auf der Eingangswelle (1) des Hauptgetriebes (39) angeordnet.

2. Getriebe nach Anspruch 1, gekennzeichnet durch die Merkmale :

die Losräder (25 und 26) des Wendegetriebes (40) sind auf der Ausgangswelle (4) der Doppelkupplung (7, 8) angeordnet ;

die Losräder (27 und 28) des Bereichsgruppengetriebes (41) sind auf der Ausgangswelle (5) des Schaltgetriebes angeordnet ;

Wendegetriebe (40) und Bereichsgruppengetriebe (41) haben eine gemeinsame Zwischenwelle (29) mit zwei Festrädern (30 und 31) ;

Wendegetriebe (40) und Bereichsgruppengetriebe (41) haben Synchronschaltkupplungen (13, 14, 15, 16).

3. Getriebe nach Anspruch 1, gekennzeichnet durch die Merkmale :

die Losräder (27 und 28) des Bereichsgetriebes (41) sind auf der Ausgangswelle (4) der Doppelkupplung (7, 8) angeordnet ;

die Losräder (25 und 26) des Wendegetriebes (40) sind auf der Ausgangswelle (5) des Schaltgetriebes angeordnet ;

Bereichsgetriebe (41) und Wendegetriebe (40) haben eine gemeinsame Zwischenwelle (29) mit zwei Festrädern (30 und 31) ;

Bereichsgetriebe (41) und Wendegetriebe (40) haben Synchronschaltkupplungen (13, 14, 15, 16).

4. Getriebe nach Anspruch 2, gekennzeichnet durch die Merkmale :

ein drittes Losrad (43) auf der Ausgangswelle (5) des Schaltgetriebes kämmt mit einem Festrad (22) der Eingangswelle (1) des Hauptgetriebes (39) ;

eine Reibkupplung (44) verbindet das Losrad (43) mit der Ausgangswelle (5) des Schaltgetriebes.

5. Getriebe nach einem der vorangehenden Ansprüche, gekennzeichnet durch die Merkmale :

die gemeinsame Zwischenwelle (29) des Bereichsgetriebes (41) und des Wendegetriebes (40) ist koaxial mit der Eingangswelle (1) des Hauptgetriebes (39) angeordnet und als Hohlwelle ausgebildet ;

eine Verlängerung der Eingangswelle (1) des Hauptgetriebes (39) ist als motorabhängige Zapfwelle (6) durch diese hohle Zwischenwelle (29) hindurchgeführt.

6. Getriebe nach einem der vorangehenden Ansprüche, gekennzeichnet durch die Merkmale :

vor dem Hauptgetriebe (39) ist ein Splitgruppengetriebe (34) angeordnet ;

das Splitgruppengetriebe (34) ist als Umlaufgetriebe ausgebildet ;

eine Reibkupplung (37) zwischen Steg (36) und Ausgangswelle (1) des Umlaufgetriebes (34) und eine Reibbremse (38) für den Steg machen das Splitgruppengetriebe (34) lastschaltbar ;

die Eingangswelle (1) des Hauptgetriebes (39) ist als Hohlwelle ausgebildet ;

eine Verlängerung der Eingangswelle (35) des Splitgetriebes (34) ist als motorabhängige Zapfwelle durch die hohle Eingangswelle (1) des Hauptgetriebes (39) und die hohle Zwischenwelle (29) hindurchgeführt.

7. Getriebe nach einem der vorangehenden Ansprüche, dadurch gekennzeichnet, daß die Ausgangswelle (5) des Schaltgetriebes nicht nur eine Hauptantriebsachse antreibt, sondern zur Eingangsseite des Schaltgetriebes hin als wegabhängige Zapfwelle (42) verlängert und über eine Schaltkupplung auch noch mit einer weiteren Antriebsachse verbunden ist.

8. Getriebe nach einem der vorangehenden Ansprüche, dadurch gekennzeichnet, daß die Lastschaltdoppelkupplung (7, 8) auch noch als Anfahr- und Trennkupplung benutzt wird.

## Claims

1. Powershift gear transmission, in particular for farm tractors, in group design having a multi-gear main gear set (39), a reversing gear set (40) and a range change gear set (41), with shafts (1, 2, 3, 4, 6, 29, 42), fixed gears (21, 22, 23, 24, 30, 31), idler gears (17, 18, 19, 20, 25, 26, 27, 28) and synchronized shift dog clutches (9, 10, 11, 12, 13, 14, 15, 16) and with one additional power shift friction clutch each (7, 8) in the two power branches in such a way that shafts (1, 2, 3, 4) of both power branches are arranged on a total of two axes, characterized in that

both friction clutches (7 and 8) are combined to one double clutch (7, 8) with two input shafts (2 and 3) and one outputshaft (4) and arranged in axial direction between these two input shafts (2 and 3) ;

idler gears (17, 18, 19, 20) of main gear set (39) are arranged on both input shafts (2 an 3) of double clutch (7, 8) ;

fixed gears (21, 22, 23, 24) of main gear set (39) are arranged on input shaft (1) of main gear set (39).

2. A transmission according to claim 1, characterized in that :

idler gears (25 and 26) of reversing gear set (40) are arranged on output shaft (4) of double clutch (7, 8) ;

idler gears (27 and 28) of range change gear set (41) are arranged on output shaft (5) of transmission ;

reversing gear set (40) and range change gear set (41) have a common intermediate shaft (29) with two fixed gears (30 and 31) ;

reversing gear set (40) and range change gear set (41) have synchronized shift dog clutches (13, 14, 15, 16).

3. A transmission according to claim 1, characterized in that :

idler gears (27 and 28) of range change gear set (41) are arranged on output shaft (4) of double clutch (7, 8) ;

idler gears (25 and 26) of reversing gear set (40) are arranged on output shaft (5) of transmission ;

range change gear set (41) and reversing gear set (40) have a common intermediate shaft (29) with two fixed gears (30 and 31) ;

range change gear set (41) and reversing gear set (40) have synchronized shift dog clutches (13, 14, 15, 16).

4. A transmission according to claim 2, characterized in that :

a third idler gear (43) on output shaft (5) of transmission is meshing with fixed gear (22) on input shaft (1) of main gear set ;

a friction clutch (44) connects idler gear (43) with output shaft (5) of transmission.

5. A transmission according to one of the previous claims, characterized in that :

the common shaft (29) of range change gear set (41) and reversing gear set (40) is coaxially arranged with regard to input shaft (1) of main gear set (39) and is a hollow shaft ;

an extension of input shaft (1) of main gear set (39) is an engine driven take-off shaft (6) passing through the common hollow shaft (29).

6. A transmission according to one of the previous claims, characterized in that :

a split group gear set (34) is arranged before main gear set (39) ;

the split group gear set (34) is a planetary gear set ;

a friction clutch (37) between planet carrier (36) and output shaft (1) of split group gear set (34) and a friction brake (38) for that planet carrier ensure power shift feature of split group gear set (34) ;

input shaft (1) of main gear set (39) is a hollow shaft ;

an. extension of input shaft (35) of split group gear set (34) is an engine driven take-off shaft passing through the hollow input shaft (1) of main gear set (39) and the common hollow shaft (29).

7. A transmission according to one of the previous claims, characterized in that the output shaft (5) of transmission does not only drive a main drive axle, but is also extended towards the input of the transmission as a ground driven take-off shaft (42) and is connected to another driving axle via a selector clutch.

8. A transmission according to one of ·the previous claims, characterized in that the power shift double clutch (7, 8) is also used as a starting and separating clutch.

## Revendications

1. Transmission à engrenages commandée en charge, notamment pour tracteur agricole, réalisée en groupes comprenant une boîte principale à plusieurs vitesses (39), une boîte d'inversion (40) et un groupe-relais (41), et comportant des arbres (1, 2, 3, 4, 5, 6, 29, 42), des roues fixes (21, 22, 23, 24, 30, 31), des roues libres (17, 18, 19, 20, 25, 26, 27, 28) et des embrayages de synchronisation (9, 10, 11, 12, 13, 14, 15, 16), avec deux lignes de transmission pourvues chacune d'un embrayage supplémentaire à friction (7, 8) qui est commandé en charge, les arbres (1, 2, 3, 4) de ces deux lignes de transmission étant disposés ensemble suivant deux axes, caractérisée en ce que :

les deux embrayages à friction (7 et 8) sont réunis au point de vue constructif en un embrayage double (7, 8) comportant deux arbres d'entrée (2 et 3) et un arbre de sortie (4) et ils sont placés axialement entre ces deux arbres d'entrée (2 et 3) ;

les roues libres (17, 18, 19, 20) de la boîte principale (39) sont montées sur les deux arbres d'entrée (2 et 3) de l'embrayage double (7, 8) ;

les roues fixes (21, 22, 23, 24) de la boîte principale (39) sont montées sur l'arbre d'entrée (1) de la boîte principale (39).

2. Transmission selon la revendication 1, caractérisée en ce que :

les roues libres (25 et 26) de la boîte d'inversion (40) sont montées sur l'arbre de sortie (4) de l'embrayage double (7, 8) ;

les roues libres (27 et 28) du groupe-relais (41) sont montées sur l'arbre de sortie (5) de la transmission ;

la boîte d'inversion (40) et le groupe-relais (41) comportent un arbre intermédiaire commun (29) pourvu de deux roues fixes (30 et 31) ;

la boîte d'inversion (40) et le groupe-relais (41) comportent des embrayages des synchronisations (13, 14, 15, 16).

3. Transmission selon la revendication 1, caractérisée en ce que :

les roues libres (27 et 28) du groupe-relais (41) sont montées sur l'arbre de sortie (4) de l'embrayage double (7, 8) ;

les roues libres (25 et 26) de la boîte d'inversion (40) sont montées sur l'arbre de sortie (5) de la transmission ;

le groupe-relais (41) et la boîte d'inversion (40) comportent un arbre intermédiaire commun (29) pourvu de deux roues fixes (30 et 31) ;

le groupe-relais (41) et la boîte d'inversion (40) comportent des embrayages de synchronisation (13, 14, 15, 16).

4. Transmission selon la revendication 2, caractérisée en ce que :

une troisième roue libre (43) montée sur l'arbre de sortie (5) de la transmission s'engrène avec une roue fixe (22) de l'arbre d'entrée (1) de la boîte principale (39) ;

un embrayage à friction (44) relie cette roue libre (43) à l'arbre de sortie (5) de la transmission.

5. Transmission selon l'une quelconque des revendications précédentes, caractérisée en ce que :

l'arbre intermédiaire commun (29) du groupe-relais (41) et de la boîte d'inversion (40) est monté coaxialement avec l'arbre d'entrée (1) de la boîte principale (39) et il est formé d'un arbre creux ;

un prolongement de l'arbre d'entrée (1) de la boîte principale (39) s'étend à travers cet arbre intermédiaire creux (29) sous forme d'un arbre de support (6) raccordé au moteur.

6. Transmission selon l'une quelconque des revendications précédentes, caractérisée en ce que :

une boîte de réduction (34) est disposée avant la boîte principale (39) ;

la boîte de réduction (34) est constituée par une boîte planétaire ;

un embrayage à friction (37) entre le porte-satellites (36) et l'arbre de sortie (1) de la boîte planétaire (34), et un frein à friction (38) pour le porte-satellites permettent de commander en charge la boîte de réduction (34) ;

l'arbre d'entrée (1) de la boîte principale (39) est constitué par un arbre creux ;

un prolongement de l'arbre d'entrée (35) de la boîte de réduction (34) s'étend, sous forme d'un arbre de support raccordé au moteur, à travers l'arbre d'entrée creux (1) de la boîte principale (39) et l'arbre intermédiaire creux (29).

7. Transmission selon l'une quelconque des revendications précédentes, caractérisée en ce que l'arbre de sortie (5) de la transmission n'entraîne pas seulement un arbre de transmission principal, mais est également prolongé du côté entrée de la transmission sous forme d'un arbre de support (42) raccordé aux roues motrices et est encore relié par un embrayage à un autre arbre de transmission.

8. Transmission selon l'une quelconque des revendications précédentes, caractérisée en ce que l'embrayage double (7, 8) est aussi utilisé comme embrayage de démarrage et de désaccouplement.

FIG.1

FIG.2

1

FIG. 3